# EUROPEAN PATENT SPECIFICATION

(11) **EP 1 681 450 B1**
(45) Date of publication and mention of the grant of the patent: **13.05.2009**
(21) Application number: 06000840.6
(22) Date of filing: 16.01.2006
(51) Int. Cl.: F02D 41/06, F02D 41/20, F02D 41/38, F02D 41/40, F02N 11/08

(54) **Fuel injection system**
Kraftstoffeinspritzsystem
Système d'injection de carburant

(30) Priority: 17.01.2005 JP 2005008878
(43) Date of publication of application: 19.07.2006
(73) Proprietor: Toyota Jidosha Kabushiki Kaisha, Toyota-shi, Aichi-ken, 471-8571 (JP)
(72) Inventor: Magarida, Naofumi, Toyota-shi, Aichi-ken 471-8571 (JP); Futonagane, Yoshinori, Toyota-shi, Aichi-ken 471-8571 (JP)
(74) Representative: Kuhnen & Wacker

(56) References cited:
- EP-A- 1 138 909
- EP-A- 1 375 882
- WO-A-20/04038203
- DE-A1- 10 337 875
- US-A1- 2002 046 734
- US-A1- 2004 255 910
- US-B1- 6 491 027

## Description

The present invention relates to fuel injection systems, and more particularly, to a fuel injection system for a common rail type diesel engine having an automatic engine stop/start control.

An internal combustion engine for vehicles having the idle stop function is known. This function automatically stops the engine when the vehicle stops at an intersection or the like to thus improve fuel economy. When an operation to start the vehicle is performed, the starter is activated to automatically start the engine so that the vehicle is ready to start. A system that implements the automatic engine stop/start control is disclosed in, for example, Japanese Patent Application Publication No. 2000-337188 or 2003-41967.

The automatic engine start/stop control system may be incorporated into the diesel engine for vehicles. When the system is applied to the common rail type diesel engine, the following problems occur.

The common rail type diesel engine is equipped with a fuel injection valve in which highly pressurized fuel prepared by the common rail is filled in a cylindrical valve body having a needle valve provided in the cylindrical valve body and driven by an actuator. It takes a considerable long time to restart the diesel engine due to a delay in the response of the needle valve.

The following factor may cause the delay in the response of the needle valve. First, an EDU (Electric Driver Unit) for driving the actuator may fall short of charge. The EDU is a unit specifically designed to drive an injector or spindle valve at high fuel pressure and high speed by a high-voltage, rapid charge system using a DC/DC converter. Normally, the injector or the like is directly driven by an engine computer. In contrast, in a direct-injection system, the EDU receives an injection signal from the engine computer and drives the injector or the spindle valve at high speed with a boosted voltage of 100 V or higher available in the EDU. It is thus possible to precisely regulate the air-fuel ratio. The performance of the injector driver is always monitored by the engine computer. If a fault takes place in the driver system, the engine computer executes a fail-safe sequence by, for example, cutting fuel injection for a cylinder related to the fault, and turns on an engine check indicator. When the automatic engine start/stop control system automatically stops the engine, electricity is no longer generated, so that the EDU cannot be charged any more. During the time when the diesel engine stops, the charge stored in the EDU is naturally discharged. The EDU that has fallen short of charge cannot drive the needle valve adequately in response to the injection instruction when the engine is restarted, and fuel is not injected appropriately.

Second, the needle valve in the cylindrical valve body may be deformed elastically so as to be pressed against the inner wall of the valve body because it receives high pressure produced by the common rail. This problem occurs during the time when the engine remains stopped by the automatic engine start/stop control system. In the normal injection, the needle valve is detached from the valve body only a short time that is not enough to cause elastic deformation. In contrast, when the diesel engine is stopped, the needle valve receives high common rail pressure and is elastically deformed. Usually, the engine is automatically restarted only a short time by the automatic engine stop/start control system after the engine is automatically stopped. Thus, when the engine is restarted, the high common rail pressure remains in the valve body of the fuel injection valve and the needle valve is in the elastically deformed state. It takes a certain time for the needle valve to be restored from the elastically deformed state when it is driven by the actuator at the time of restarting. Thus, the fuel injection valve opens with the delay necessary for the recovery from the elastic deformation. Usually, the above-mentioned problem does not occur when the driver intentionally turned off the ignition switch and turns it on again to start the diesel engine again.

The delay in the fuel injection may not bring about appropriate ignition in the first cycle (the first compression stroke) after the engine is restarted. Thus, ignition in the involved cylinder does not occur until the next compression stroke. This delays the engine restarting. The relay in restarting the engine may cause a delay in starting the vehicle.

The present invention has been made in view of the above-mentioned circumstances and provides a fuel injection system capable of realizing appropriate ignition in the first cycle after the engine is restarted and restarting the engine quickly and stably.

WO2004/038203 describes a pseudo-injection pulse. EP-A-1 375 882 describes a pseudo-injection pulse.

According to an aspect of the present invention, there is provided a fuel injection system for a common rail type diesel engine having an automatic engine stop/start control, characterized by comprising a controller that executes an injection accelerating control to avoid a delay in injection of a first fuel injection cycle after the diesel engine is automatically restarted according to claim 1.

According to another aspect of the present invention, there is provided a diesel engine equipped with the above-mentioned fuel injection system.

According to a further aspect of the present invention, there is provided a method of controlling a fuel injection for a common rail type diesel engine including a step of determining whether the diesel engine should be automatically restarted, characterized in that the method further comprises a step of executing an injection accelerating control to avoid a delay in injection of a first fuel injection cycle after the diesel engine is automatically restarted when it is determined that the diesel engine should be automatically restarted according to claim 13.

Other objects, features and advantages of the present invention will become more apparent from the following detailed description when read in conjunction with the following drawings, in which:
Fig. 1 is a block diagram of a diesel engine in accordance with an embodiment of the present invention;
Fig. 2 is a cross-sectional view of a fuel injection valve employed in the diesel engine shown in Fig. 1;
Fig. 3 is a flow chart of an injection accelerating control program in accordance with a first embodiment of the present invention;
Fig. 4 is a flowchart of an injection accelerating control program in accordance with a second embodiment of the present invention;
Fig. 5 is a waveform diagram of a fuel injection instruction used in the second embodiment; and
Fig. 6 is a flowchart of an injection accelerating control program in accordance with a third embodiment of the present invention.

A description will now be given, with reference to the accompanying drawings, of embodiments of the present invention.

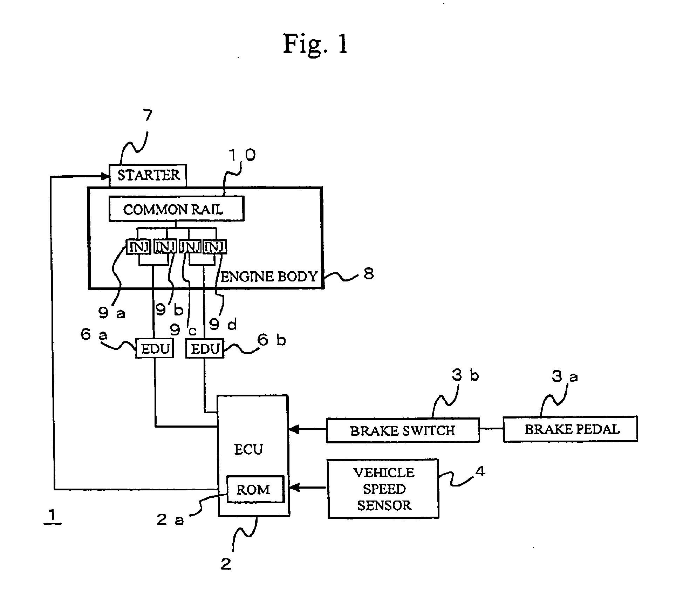

Fig. 1 shows a diesel engine 1 equipped with a fuel injection system in accordance with an embodiment of the present invention. The diesel engine 1 is equipped with an ECU (Electronic Control Unit) 2, which functions as a controller of the diesel engine 1 and handles various controls. The ECU 2 is connected to a brake switch 3b interlocked with a brake pedal 3a, a vehicle speed sensor 4, a starter 5, a first EDU 6a, and a second EDU 6b. The ECU 2 includes a microcomputer as a main component, and a ROM 2a, which stores an automatic engine stop program, and an automatic engine start program in order to perform the automatic engine start/stop control of the diesel engine 1. Further, the ROM 2a stores an injection accelerating control program for the purpose of avoiding the delay in injection in the first fuel injection after the diesel engine 1 is automatically restarted.

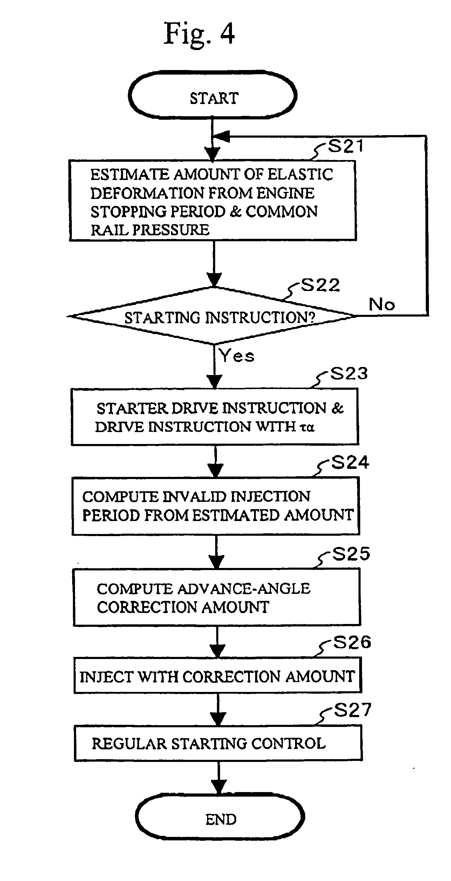

The diesel engine 1 shown in Fig. 4 has four cylinders respectively provided with four fuel injection valves (INJ) 9 attached to an engine body 8. The four fuel injection valves 9 are a first fuel injection valve 9a, a second fuel injection valve 9b, a third fuel injection valve 9c and a fourth fuel injection valve 9d. A common rail 10 is connected to the four fuel injection valves 9a through 9d, and supplies highly pressurized fuel thereto. The first and second fuel injection valves 9a and 9b are connected to the first EDU 6a, and the third and fourth fuel injection valves 9c and 9d are connected to the second EDU 6b.

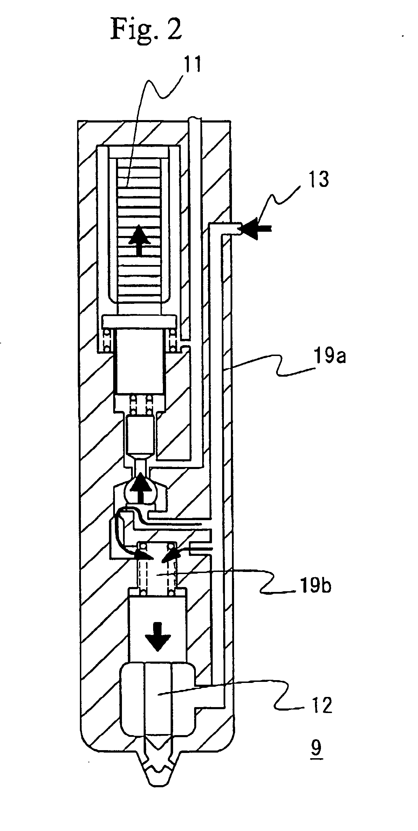

Fig. 2 is a cross-sectional view of the fuel injection valve 9 used in the diesel engine 1 shown in Fig. 1. The fuel injection valve 9 has a piezoelectric actuator 11, and a needle valve 12. The piezoelectric actuator 11 has multiple piezoelectric elements, which are laminated in a cylindrical valve body 19a of the fuel injection valve 9. The needle valve 12 is driven by the piezoelectric actuator 11. A control room 19b is provided in the valve body 19a. The piezoelectric actuator 11 is connected to the first EDU 6a or the second EDU 6b, and receives driving electricity therefrom. As indicated by an arrow 13, highly pressurized fuel is supplied to the valve body 19a from the common rail 10. When the piezoelectric actuator 11 is driven, the pressure balance within the valve body 19a is changed so as to slide the needle valve 12 so that the fuel injection valve 9 can be opened or closed.

The fuel injection valve 9 may be replaced with another type of fuel injection valve. For example, another type of actuator may be used for the piezoelectric type.

A description will now be given of an operation of the diesel engine 1. In the following, it is assumed that the diesel engine 1 is installed in a vehicle equipped with an automatic transmission.

The driver of the vehicle operates the brakes 3 and the brake switch 3b is turned on. The ECU 2 refers to data supplied from the vehicle speed sensor 4 and determines whether the vehicle stops. When it is determined that the vehicle stops, the ECU 2 executes the automatic engine stop program stored in the ROM 2a in the ECU 2, and stops issuance of commands for fuel injection to the first and second EDUs 6a and 6b. Thus, fuel injection by the fuel injection valves 9a through 9d is stopped so that the diesel engine 1 stops operating.

Even when the engine 1 is in the stopped state, the common rail pressure is applied to the control room 19b of the fuel injection valve 9, and the tip end of the needle valve 12 is pressed against the end of the valve body 19a. During the time when the diesel engine 1 is stopping, the needle valve 12 continuously receives the high common rail pressure and is gradually deformed elastically. In the engine stopped state, the generator does not work, and the first and second EDUs 6a and 6b continuously discharge the charges stored therein, and fall short of charges.

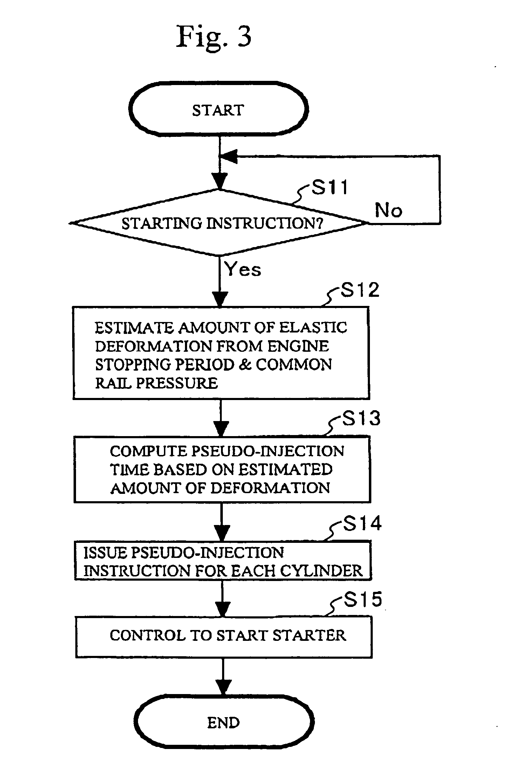

When the brake pedal 3 is released under the condition that the engine is in the stopped state, the brake switch 3b is turned off, and the ECU 2 start to execute the automatic engine start program stored in the ROM 2a. Then, the ECU 2 drives the starter 7, so that the diesel engine 1 can be automatically restarted. Simultaneously, the ECU 2 starts to execute the fuel accelerating control program stored in the ROM 2a and performs a starter driving control (step S15 in Fig. 3) described in the program. A description will now be given, with reference to the flowchart of Fig. 3, of a control based on the injection accelerating control program in accordance with a first embodiment of the present invention.

First, the ECU 2 determines, at step S11, whether the engine restart instruction is issued, that is, whether the brake switch 3b is turned off. When the answer of step S11 is NO, the ECU 2 executes step S11 again. The ECU 2 executes step S11 repeatedly until the restart instruction is issued.

When the answer of step S11 becomes YES, the ECU 2 proceeds to step S12 and estimates the amount or degree of elastic deformation of the needle valves 12 by referring to the time or period during which the engine 1 is in the stopped state and referring to the common rail pressure. It is not essential to execute step S12 after the answer of step S11 becomes YES but is possible to execute step S12 at an appropriate timing. For example, the amount of elastic deformation of the needle valves 12 may be periodically estimated after the program shown in Fig. 3 is initiated. Preferably, the amount of elastic deformation of the needle valves 12 is estimated by referring to both the engine stopping period before the diesel engine 1 is restarted and the common rail pressure. Alternatively, either one of the engine stopping period and the common rail pressure may be referred to in order to estimate the amount of elastic deformation of the needle valves 12.

At step S13 subsequent to step S12, the ECU 2 computes the time it takes to restore the needle valves 12 from the elastically deformed state on the basis of the estimated amount of elastic deformation thereof, and sets the computed time as a pseudo-injection time. During the pseudo-injection time, fuel is not injected through the fuel injection valves 9a through 9d.

At step S 14, the ECU 2 supplies the first and second EDUs 6a and 6b with a pseudo-injection instruction to the fuel injection valves 9a through 9d. In response to the instruction, the EDUs 6a and 6b are charged and the needle valves 12 are simultaneously restored from the elastically deformed state.

In the above-mentioned sequence, the first and second EDUs 6a and 6b are charged while the needle valves 12 are restored from the elastically deformed state. Then, as step S15, the ECU 2 issues the starter driving instruction. The starter 7 is thus driven, and the diesel engine 1 is restarted.

As described above, according to the present invention, the first and second EDUs 6a and 6b are charged and the needle valves 12 are simultaneously restored from the elastically deformed state prior to driving the starter 7. It is thus possible to avoid the delay in injection of fuel in the first fuel injection cycle after the starter 7 is driven and to restart the diesel engine 1 quickly and reliably in the first fuel injection cycle. The driver does not feel stress and starts the vehicle smoothly.

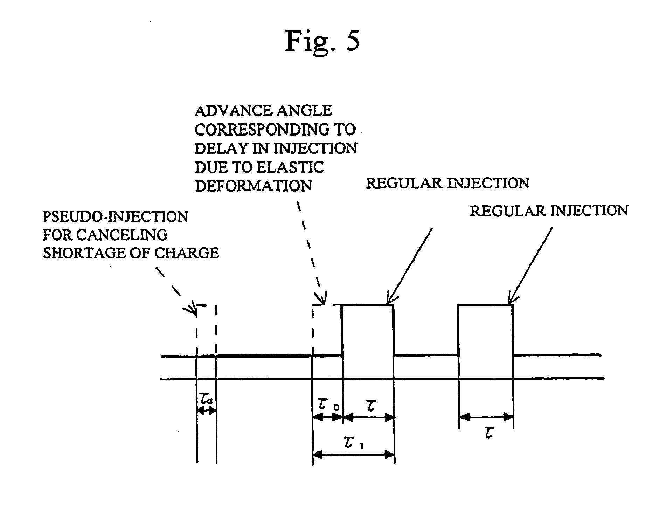

A description will now be given, with reference to Figs. 4 and 5, of a second embodiment of the present invention. In the above-mentioned first embodiment, prior to driving the starter 7, the first and second EDUs 6a and 6b are charged and the needle valves 12 are restored from the elastically deformed state. In contrast, the second embodiment charges the first and second EDUs 6a and 6b and restores the needle valves 12 from the elastically deformed state after the starter 7 starts to operate. The diesel engine of the second embodiment has the same structure as shown in Fig. 1 except the content of the injection accelerating control program stored in the ROM 2a.

When the diesel engine 1 stops, the ECU 2 estimates, at step S21, the amount or degree of elastic deformation of the needle valves 12 by referring to the time during which the engine 1 is in the stopped state and referring to the common rail pressure. Step 21 is the same as step S12 shown in Fig. 3.

Then, the ECU 2 proceeds to step S22, and determines whether the engine restart instruction is issued, that is, whether the brake switch 3b is turned off. When the answer of Step S22 is NO, the process returns to step S21. The ECU 2 executes step S21 repeatedly until the engine restart instruction is issued. The ECU 2 accurately estimates the amount of elastic deformation of the valves 12 that may vary with time.

When the answer of step S22 becomes YES, the process proceeds to step S23 at which the ECU 2 issues the instruction to drive the starter 7, and simultaneously issues an instruction to drive the first and second EDUs 6a and 6b for a minimum time τα. The minimum time τα corresponds to the pulse width of the drive signal applied to the first and second EDUs 6a and 6b and minimally needed to set the first and second EDUs 6a and 6b to the charged state. The minimum time τα may, for example, be 50 µs. The instruction to drive the starter 7 for the minimum time τα is issued before fuel is actually injected, as shown in Fig. 5. Thus, the first and second EDUs 6a and 6b can store the charges enough to drive the piezoelectric actuators 11 of the fuel injection valves 9 without any delay in response.

At step S24, the ECU 2 computes an invalid injection period from the estimated amount of elastic deformation of the needle valves 12 obtained at step S21. At step S25, the ECU 2 computes an advance-angle correction amount To corresponding to the invalid injection period obtained at step S24.

At step S26 subsequent to step S25, the ECU 2 computes a corrected fuel injection period τ1 of the first-time fuel injection cycle by adding the advance-angle correction amount τo to the regular injection period τ, and starts fuel injection with the corrected fuel injection period τ1 thus computed. With this structure, the needle valves 12 can be restored from the elastically deformed state within the advance-angle correction amount τo after the injection instruction is issued. It is thus possible to secure the enough amount of fuel to be injected in the first injection cycle without any delay in the time of opening the valves 12.

Then, the process proceeds to step S27 at which the ECU 2 executes the normal starting control with the regular fuel injection period τ from the second fuel injection cycle.

It is thus possible to start the diesel engine 1 quickly and reliably.

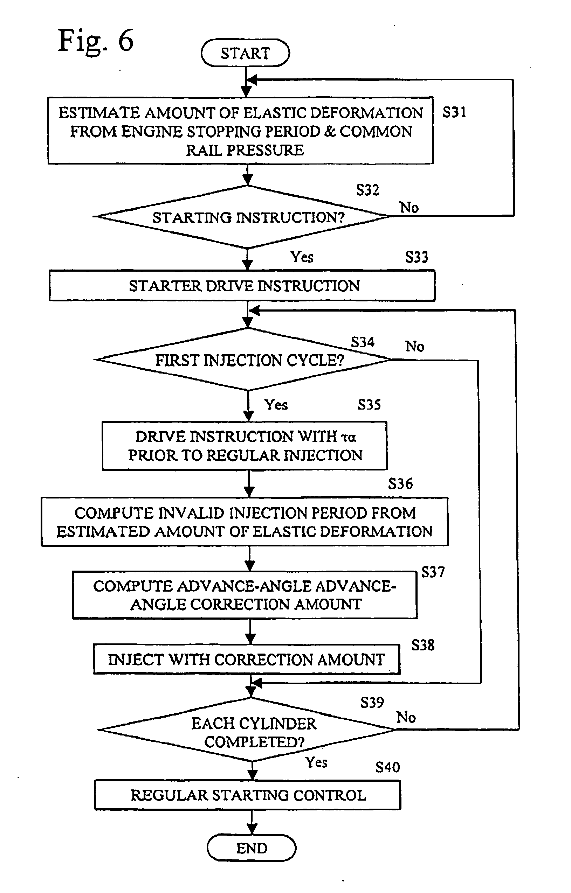

A description will now be given, with reference to Fig. 6, of a third embodiment of the present invention. The third embodiment differs from the second embodiment in that the third embodiment employs a more fine control for each cylinder.

Steps S31 and S32 are respectively the same as steps S21 and S22 of the second embodiment shown in Fig. 4, and a description thereof is thus omitted.

When the answer of step S32 is YES, the ECU 2 issues the drive instruction to the starter 7 at step S33.

At step S34, the ECU 2 determines whether each cylinder is about to enter into the first fuel injection cycle. The four cylinders of the four-cylinder diesel engine 1 shown in Fig. 1 sequentially have the ignition timings. In each of the cylinders, the injection accelerating control is performed in order to make ready for the first fuel injection cycle so that the first and second EDUs 6a and 6b can be charged and the needle valves 12 can be restored from the elastically deformed state.

When the answer of step S34 is NO, that is, when each cylinder does not have the first fuel injection cycle, the process proceeds to step S39 at which the ECU 2 determines whether the injection accelerating control for each cylinder is completed. When the answer of step S39 is NO, the process returns to step S34, and the above mentioned process is repeatedly carried out.

When the answer of step S34 is YES, that is, when the cylinder of interest is about to enter into the first fuel injection cycle, the ECU 2 sequentially executes steps S35 to S38, which are respectively the same as steps 23 to S26 of the second embodiment shown in Fig. 3 except step S23 at which the driving instruction to the starter 7 is issued. More specifically, at step S35, the ECU 2 issues the instruction to drive the starter 7, and simultaneously issues the instruction to drive the first and second EDUs 6a and 6b for the minimum time τα. At step S36, the ECU 2 computes the invalid injection period from the estimated amount of elastic deformation of the needle valves 12 obtained at step S31. At step S37, the ECU 2 computes the advance-angle correction amount τo corresponding to the invalid injection period obtained at step S36. At step S38, the ECU 2 computes the corrected fuel injection period τ1 of the first-time fuel injection cycle by adding the advance-angle correction amount τo to the regular injection period τ, and starts fuel injection with the corrected fuel injection period τ1 thus computed.

At step S39, the ECU 2 determines whether the injection accelerating control for each cylinder is completed. When the answer of step S39 is YES, the ECU 2 executes the normal starting control with the regular fuel injection period τ from the second fuel injection cycle at step S40. When the answer of step S39 is NO, the process of the ECU 2 returns to step S34.

It is thus possible to start the diesel engine 1 quickly and reliably.

The present invention is not limited to the specifically disclosed embodiments, but various embodiments, variations and modifications may be made without departing from the scope of the present invention. For example, the fuel accelerating control program may be modified so that the steps thereof are executed in a sequence different from the aforementioned sequences as long as the delay in injection in the first fuel injection cycle can be avoided.

## Claims

1. A fuel injection system for a common rail type diesel engine having an automatic engine stop/start control,
**characterized by** comprising
a controller that executes an injection accelerating control to avoid a delay in injection of a first fuel injection cycle after the diesel engine is automatically restarted,
wherein said controller issues a pseudo-injection instruction that drives a needle valve of a fuel injection valve for a pseudo-injection time without actually injecting fuel thereto which is computed based on an estimate of the amount of elastic deformation of the needle valve by referring to an engine stopping period before the diesel engine is restarted in the automatic engine stop/start control.

2. The fuel injection system as claimed in claim 1, **characterized in that** said pseudo-injection instruction drives a needle valve of a fuel injection valve without actually injecting fuel thereto via an EDU (Electric Drive Unit), which is charged in response to the pseudo-injection instruction.

3. The fuel injection system as claimed in claim 1, **characterized in that** the controller issues an injection instruction that drives a needle for a longer fuel injection period in the first fuel injection cycle than that in a fuel injection cycle following the first fuel injection cycle.

4. The fuel injection system as claimed in claim 1, **characterized in that** the controller issues an injection instruction that drives a needle in the first fuel injection cycle at an advance-angle timing.

5. The fuel injection system as claimed in claim 1, **characterized in that** said pseudo-injection instruction charges an EDU (Electric Drive Unit) prior to the first fuel injection cycle, and issues a fuel injection instruction that drives a needle valve of a fuel injection valve via the EDU in the first fuel injection cycle.

6. The fuel injection system as claimed in claim 5, **characterized in that** the controller issues the fuel injection instruction for the first fuel injection cycle at an advance-angle timing as compared to a regular fuel injection timing.

7. The fuel injection system as claimed in claim 1, **characterized in that** the controller computes an amount of elastic deformation of a needle valve of a fuel injection valve by referring to an engine stopping time before the diesel engine is restarted, and the controller executes the injection accelerating control based on the amount of elastic deformation of the needle valve.

8. The fuel injection system as claimed in claim 1, **characterized in that** the controller refers to a common rail pressure and executes the injection accelerating control based on the common rail pressure.

9. The fuel injection system as claimed in claim 1, **characterized in that** the controller computes an amount of elastic deformation of a needle valve of a fuel injection valve by referring to an engine stopping time before the diesel engine is restarted and a common rail pressure, and the controller executes the injection accelerating control based on the amount of elastic deformation of the needle valve and the common rail pressure.

10. The fuel injection system as claimed in claim 1, **characterized in that** the controller computes a fuel injection timing in the first fuel injection cycle after the diesel engine is restarted before the controller issues a starter driving instruction in order to restart the diesel engine.

11. The fuel injection system as claimed in claim 1, **characterized in that** the controller computes a fuel injection timing in the first fuel injection cycle after the diesel engine is restarted after the controller issues a starter driving instruction in order to restart the diesel engine.

12. A diesel engine comprising a fuel injection system as claimed in any of claims 1 to 11.

13. A method of controlling a fuel injection for a common rail type diesel engine including a step of determining whether the diesel engine should be automatically restarted,
**characterized in that**
the method further comprises a step of executing an injection accelerating control to avoid a delay in injection of a first fuel injection cycle after the diesel engine is automatically restarted when it is determined that the diesel engine should be automatically restarted
wherein a pseudo-injection instruction is issued that drives a needle valve of a fuel injection valve for a pseudo-injection time without actually injecting fuel thereto which is computed based on an estimate of the amount of elastic deformation of the needle valve by referring to an engine stopping period before the diesel engine is restarted in the automatic engine stop/start control.

14. The method as claimed in claim 13, **characterized in that** said step of issuing an injection instruction drives a needle for a longer fuel injection period in the first fuel injection cycle than that in a fuel injection cycle following the first fuel injection cycle.

15. The method as claimed in claim 13, **characterized in that** said step of issuing an injection instruction drives a needle in the first fuel injection cycle at an advance-angle timing.

16. The method as claimed in claim 13, **characterized by** further comprising the steps of:
estimating an amount of elastic deformation of a needle valve of a fuel injection valve by referring to at least one of an engine stopping time before the diesel engine is restarted and a common rail pressure; and
executing the injection accelerating control based on said at least one of the amount of elastic deformation of the needle valve and the common rail pressure.

## Patentansprüche

1. Kraftstoff-Einspritzsystem für einen als Common-Rail-Motor ausgebildeten Dieselmotor, mit einer automatischen Motorstopp/-start-Steuerung,
**dadurch gekennzeichnet, dass** es aufweist:
eine Steuereinrichtung, die eine Einspritzungs-Verfrühungssteuerung durchführt, um eine Einspritzungsverspätung in einem ersten Kraftstoff-Einspritzzyklus nach dem automatischen Neustart des Dieselmotors zu vermeiden,
wobei die Steuereinrichtung einen Pseudoeinspritzbefehl ausgibt, der ein Nadelventil eines Kraftstoff-Einspritzventils für eine Pseudoeinspritzdauer ansteuert, ohne tatsächlich Kraftstoff in dieses einzuspritzen, und der auf der Basis einer Schätzung des Umfangs einer elastischen Verformung des Nadelventils unter Bezugnahme auf einen Motorstopp-Zeitraum vor dem Neustart des Dieselmotors in der automatischen Motorstopp/-start-Steuerung berechnet wird.

2. Kraftstoff-Einspritzsystem nach Anspruch 1, **dadurch gekennzeichnet, dass** der Pseudoeinspritzbefehl über eine ansprechend auf den Pseudoeinspritzbefehl geladene EDU (elektrische Antriebseinheit) ein Nadelventil eines Kraftstoff-Einspritzventils ansteuert, ohne tatsächlich Kraftstoff in dieses einzuspritzen.

3. Kraftstoff-Einspritzsystem nach Anspruch 1, **dadurch gekennzeichnet, dass** die Steuereinrichtung einen Einspritzbefehl ausgibt, der im ersten Kraftstoff-Einspritzzyklus eine Nadel über einen Kraftstoff-Einspritzzeitraum ansteuert, der länger ist als in einem Kraftstoff-Einspritzzyklus, der auf den ersten Kraftstoff Einspritzzyklus folgt.

4. Kraftstoff-Einspritzsystem nach Anspruch 1, **dadurch gekennzeichnet, dass** die Steuereinrichtung einen Einspritzbefehl ausgibt, der im ersten Kraftstoff-Einspritzzyklus eine Nadel mit einem Voreilwinkel ansteuert.

5. Kraftstoff-Einspritzsystem nach Anspruch 1, **dadurch gekennzeichnet, dass** der Pseudoeinspritzbefehl eine EDU (elektrische Antriebseinheit) vor dem ersten Kraftstoff-Einspritzzyklus lädt und einen Kraftstoff-Einspritzbefehl ausgibt, der im ersten Kraftstoff-Einspritzzyklus ein Nadelventil eines Kraftstoff-Einspritzventils über die EDU ansteuert.

6. Kraftstoff-Einspritzsystem nach Anspruch 5, **dadurch gekennzeichnet, dass** die Steuereinrichtung den Kraftstoff-Einspritzbefehl für den ersten Kraftstoff-Einspritzzyklus mit einem Voreilwinkel gegenüber einem normalen Kraftstoffeinspritzungs-Zeitpunkt ausgibt.

7. Kraftstoff-Einspritzsystem nach Anspruch 1, **dadurch gekennzeichnet, dass** die Steuereinrichtung einen Umfang einer elastischen Verformung des Nadelventils eines Kraftstoff-Einspritzventils unter Bezugnahme auf eine Motorstoppdauer vor dem Neustart des Dieselmotors berechnet, und die Steuereinrichtung die Einspritzungs-Verfrühungssteuerung auf der Basis des Umfangs der elastischen Verformung des Nadelventils berechnet.

8. Kraftstoff-Einspritzsystem nach Anspruch 1, **dadurch gekennzeichnet, dass** die Steuereinrichtung auf einen Common-Rail-Druck Bezug nimmt und auf der Basis des Common-Rail-Drucks die Einspritzungs-Verfrühungssteuerung ausführt.

9. Kraftstoff-Einspritzsystem nach Anspruch 1, **dadurch gekennzeichnet, dass** die Steuereinrichtung einen Umfang einer elastischen Verformung eines Nadelventils eines Kraftstoff-Einspritzventils unter Bezugnahme auf eine Motorstoppdauer vor dem Neustart des Dieselmotors und einen Common-Rail-Druck berechnet und die Steuereinrichtung die Einspritzungs-Verfrühungssteuerung auf der Basis des Umfangs der elastischen Verformung des Nadelventils und des Common-Rail-Drucks ausführt.

10. Kraftstoff-Einspritzsystem nach Anspruch 1, **dadurch gekennzeichnet, dass** die Steuereinrichtung einen Kraftstoffeinspritzungs-Zeitpunkt im ersten Kraftstoff-Einspritzzyklus nach dem Neustart des Dieselmotors berechnet, bevor die Steuereinrichtung einen Starter-Ansteuerbefehl ausgibt, um den Dieselmotor neu zu starten.

11. Kraftstoff-Einspritzsystem nach Anspruch 1, **dadurch gekennzeichnet, dass** die Steuereinrichtung einen Kraftstoffeinspritzungs-Zeitpunkt im ersten Kraftstoff-Einspritzzyklus nach dem Neustart des Dieselmotors berechnet, nachdem die Steuereinrichtung einen Starter-Ansteuerbefehl ausgibt, um den Dieselmotor neu zu starten.

12. Dieselmotor, aufweisend: ein Kraftstoff-Einspritzsystem nach einem der Ansprüche 1 bis 11.

13. Verfahren zum Steuern einer Kraftstoffeinspritzung für einen als Common-Rail-Motor ausgebildeten Dieselmotor, einen Schritt aufweisend, in dem bestimmt wird, ob der Dieselmotor automatisch neu gestartet werden soll,
**dadurch gekennzeichnet, dass**
das Verfahren ferner einen Schritt aufweist, in dem eine Einspritzungs-Verfrühungssteuerung durchgeführt wird, um eine Einspritzungsverspätung nach einem automatischen Neustart des Dieselmotors zu vermeiden, wenn bestimmt wird, dass der Dieselmotor automatisch neu gestartet werden soll,
wobei ein Pseudoeinspritzbefehl ausgegeben wird, der ein Nadelventil eines Kraftstoff-Einspritzventils für eine Pseudoeinspritzdauer ansteuert, ohne tatsächlich Kraftstoff in dieses einzuspritzen, und der auf der Basis einer Schätzung eines Umfangs einer elastischen Verformung des Nadelventils unter Bezugnahme auf einen Motorstopp-Zeitraum vor dem Neustart des Dieselmotors in der automatischen Motorstopp/-start-Steuerung berechnet wird.

14. Verfahren nach Anspruch 13, **dadurch gekennzeichnet, dass** durch den Schritt, in dem ein Einspritzbefehl ausgegeben wird, eine Nadel im ersten Kraftstoff-Einspritzzyklus für einen längeren Kraftstoffeinspritzungs-Zeitraum angesteuert wird als in einem Kraftstoff-Einspritzzyklus, der auf den ersten Kraftstoff Einspritzzyklus folgt.

15. Verfahren nach Anspruch 13, **dadurch gekennzeichnet, dass** durch den Schritt, in dem ein Einspritzbefehl ausgegeben wird, eine Nadel im ersten Kraftstoff-Einspritzzyklus mit einem Voreilwinkel angesteuert wird.

16. Verfahren nach Anspruch 13, **dadurch gekennzeichnet, dass** es ferner die folgenden Schritt aufweist:
Schätzen eines Umfangs einer elastischen Verformung eines Nadelventils eines Kraftstoff-Einspritzventils unter Bezugnahme auf die Motorstoppdauer vor dem Neustart des Dieselmotors und/oder auf einen Common-Rail-Druck; und
Ausführen der Einspritzungs-Verfrühungssteuerung auf der Basis des Umfangs der elastischen Verformung des Nadelventils und/oder des Common-Rail-Drucks.

## Revendications

1. Système d'injection de carburant pour un moteur diesel de type rampe commune ayant une commande automatique d'arrêt/de démarrage du moteur,
**caractérisé par** le fait de comprendre
une unité de commande qui exécute une commande d'accélération d'injection pour éviter un retard d'injection d'un premier cycle d'injection de carburant après redémarrage automatique du moteur diesel,
dans lequel ladite unité de commande émet une instruction de pseudo-injection qui entraîne un pointeau d'une soupape d'injection de carburant pendant une durée de pseudo-injection sans y injecter effectivement du carburant qui est calculé sur la base d'une estimation de l'ampleur de la déformation élastique du pointeau en se rapportant à une période d'arrêt du moteur avant le redémarrage du moteur diesel dans la commande automatique d'arrêt/de démarrage du moteur.

2. Système d'injection de carburant tel que revendiqué dans la revendication 1, **caractérisé en ce que** ladite instruction de pseudo-injection entraîne un pointeau d'une soupape d'injection de carburant sans y injecter effectivement du carburant par le biais d'une EDU (Unité de Commande Electrique), qui est chargée en réponse à l'instruction de pseudo-injection.

3. Système d'injection de carburant tel que revendiqué dans la revendication 1, **caractérisé en ce que** l'unité de commande émet une instruction d'injection qui entraîne une aiguille sur une période d'injection de carburant plus longue dans le premier cycle d'injection de carburant que celle dans un cycle d'injection de carburant suivant le premier cycle d'injection de carburant.

4. Système d'injection de carburant tel que revendiqué dans la revendication 1, **caractérisé en ce que** l'unité de commande émet une instruction d'injection qui entraîne une aiguille dans le premier cycle d'injection de carburant à un minutage d'angle d'avance.

5. Système d'injection de carburant tel que revendiqué dans la revendication 1, **caractérisé en ce que** ladite instruction de pseudo-injection charge une EDU (Unité de Commande Electrique) avant le premier cycle d'injection de carburant, et émet une instruction d'injection de carburant qui entraîne un pointeau d'une soupape d'injection de carburant à travers l'EDU dans le premier cycle d'injection de carburant.

6. Système d'injection de carburant tel que revendiqué dans la revendication 5, **caractérisé en ce que** l'unité de commande émet l'instruction d'injection de carburant pour le premier cycle d'injection de carburant à un minutage d'angle d'avance en comparaison à un minutage régulier d'injection de carburant.

7. Système d'injection de carburant tel que revendiqué dans la revendication 1, **caractérisé en ce que** l'unité de commande calcule une ampleur de la déformation élastique d'un pointeau d'une soupape d'injection de carburant en se rapportant à une durée d'arrêt du moteur avant le redémarrage du moteur diesel, et l'unité de commande exécute la commande d'accélération d'injection sur la base de l'ampleur de la déformation élastique du pointeau.

8. Système d'injection de carburant tel que revendiqué dans la revendication 1, **caractérisé en ce** l'unité de commande se rapporte à une pression de la rampe commune et exécute la commande d'accélération d'injection sur la base de la pression de la rampe commune.

9. Système d'injection de carburant tel que revendiqué dans la revendication 1, **caractérisé en ce que** l'unité de commande calcule une ampleur de la déformation élastique d'un pointeau d'une soupape d'injection de carburant en se rapportant à une durée d'arrêt du moteur avant le redémarrage du moteur diesel et à une pression de la rampe commune, et l'unité de commande exécute la commande d'accélération d'injection sur la base de l'ampleur de la déformation élastique du pointeau et de la pression de la rampe commune.

10. Système d'injection de carburant tel que revendiqué dans la revendication 1, **caractérisé en ce que** l'unité de commande calcule un minutage d'injection de carburant dans le premier cycle d'injection de carburant après le redémarrage du moteur diesel avant que l'unité de commande n'émet une instruction d'entraînement du démarreur dans le but de redémarrer le moteur diesel.

11. Système d'injection de carburant tel que revendiqué dans la revendication 1, **caractérisé en ce que** l'unité de commande calcule un minutage d'injection de carburant dans le premier cycle d'injection de carburant après le redémarrage du moteur diesel après que l'unité de commande émet une instruction d'entraînement du démarreur dans le but de redémarrer le moteur diesel.

12. Moteur diesel comprenant un système d'injection de carburant tel que revendiqué dans l'une des revendications 1 à 11.

13. Procédé de commande d'une injection de carburant pour un moteur diesel de type rampe commune comprenant une étape qui consiste à déterminer si le moteur diesel doit être automatiquement redémarré,
**caractérisé en ce que**
le procédé comprend en plus une étape qui consiste à exécuter une commande d'accélération d'injection pour éviter un retard d'injection d'un premier cycle d'injection de carburant après le redémarrage automatique du moteur diesel lorsque l'on détermine que le moteur diesel doit être automatiquement redémarré
dans lequel une instruction de pseudo-injection qui entraîne un pointeau d'une soupape d'injection de carburant sur une durée de pseudo-injection sans y injecter effectivement du carburant est émise qui est calculée sur la base d'une estimation de l'ampleur de la déformation élastique du pointeau en se rapportant à une période d'arrêt du moteur avant le redémarrage du moteur diesel dans la commande automatique d'arrêt/de démarrage du moteur.

14. Procédé tel que revendiqué dans la revendication 13, **caractérisé en ce que** ladite étape qui consiste à émettre une instruction d'injection entraîne une aiguille pendant une période d'injection de carburant plus longue dans le premier cycle d'injection de carburant que celle dans un cycle d'injection de carburant suivant le premier cycle d'injection de carburant.

15. Procédé tel que revendiqué dans la revendication 13, **caractérisé en ce que** ladite étape qui consiste à émettre une instruction d'injection entraîne une aiguille dans le premier cycle d'injection de carburant à un minutage d'angle d'avance.

16. Procédé tel que revendiqué dans la revendication 13, **caractérisé par** le fait de comprendre en plus les étapes qui consistent à:
estimer une ampleur de la déformation élastique d'un pointeau d'une soupape d'injection de carburant en se rapportant à au moins l'une d'une durée d'arrêt du moteur avant le redémarrage du moteur diesel et d'une pression de la rampe commune; et
exécuter la commande d'accélération d'injection sur la base de ladite au moins l'une de l'ampleur de la déformation élastique du pointeau et de la pression de la rampe commune.
